# EUROPEAN PATENT APPLICATION

(11) **EP 4 542 477 A1**
(43) Date of publication of application: **23.04.2025**
(21) Application number: 23823978.4
(22) Date of filing: 15.06.2023
(51) Int. Cl.: G06Q 30/0201

(54) **INFORMATION PROCESSING DEVICE, INFORMATION PROCESSING METHOD, AND INFORMATION PROCESSING PROGRAM**

(30) Priority: 15.06.2022 JP 2022096583
(71) Applicant: Pioneer Corporation, Tokyo 113-0021 (JP)
(72) Inventor: ISHIZAKI, Yuya, Tokyo 112-0002 (JP)
(74) Representative: Hoffmann Eitle
(86) International application number: PCT/JP2023/022256
(87) International publication number: WO 2023/243688

(57) **Abstract**

An information processing apparatus (100) according to the present application includes an acquisition unit (132) that acquires area information that indicates a living sphere area of a user on a map, a specifying unit (137) that specifies a planimetric feature whose site is partially included in the living sphere area, and an updating unit (138) that updates the living sphere area based on a site area that indicates a range of the site occupied by the planimetric feature that has been specified by the specifying unit (137) and based on the living sphere area.

## Description

### Field

The present invention relates to an information processing apparatus, an information processing method, and an information processing program.

### Background

Conventionally, a technology for specifying a living sphere of a user and sorting pieces of content corresponding to habits of the user in the specified living sphere has been proposed.

### Citation List

### Patent Literature

Patent Literature 1: Japanese Laid-open Patent Publication No. 2007-264764

### Summary

### Technical Problem

However, in the above described conventional technology, it is not always possible to specify the living sphere of the user with high accuracy.

For example, with the above described conventional technology, a range of usual activities of the user is statistically found out from a movement history of the user, and this range of activities is consequently specified as the living sphere. However, with such a statistical technique, for example, in a case where a true object target for the user is present in a vast site, it is not always possible to obtain the living sphere including this object target, and there is room for improvement in terms of specifying the living sphere of the user with high accuracy.

Accordingly, the present invention has been conceived in light of the circumstances described above and an object thereof is to provide an information processing apparatus, an information processing method, and an information processing program capable of specifying, for example, a living sphere of a user with high accuracy. Solution to Problem

An information processing apparatus according to claim 1 includes: an acquisition unit that acquires area information that indicates a living sphere area of a user on a map; a specifying unit that specifies a planimetric feature whose site is partially included in the living sphere area; and an updating unit that updates the living sphere area based on a site area that indicates a range of the site occupied by the planimetric feature that has been specified by the specifying unit and based on the living sphere area.

An information processing method according to claim 9 is executed by an information processing apparatus, the information processing method comprising: an acquiring step of acquiring area information that indicates a living sphere area of a user on a map; a specifying step of specifying a planimetric feature whose site is partially included in the living sphere area; and an updating step of updating the living sphere area based on a site area that indicates a range of the site occupied by the planimetric feature that has been specified by the specifying step and based on the living sphere area.

An information processing program according to claim 10 is executed by an information processing apparatus to execute a process comprising: an acquiring step of acquiring area information that indicates a living sphere area of a user on a map; a specifying step of specifying a planimetric feature whose site is partially included in the living sphere area; and an updating step of updating the living sphere area based on a site area that indicates a range of the site occupied by the planimetric feature that has been specified by the specifying step and based on the living sphere area.

### Brief Description of Drawings

FIG. 1 is a diagram illustrating one example of an information processing system according to an embodiment.
FIG. 2 is an explanation diagram for explaining an overview of a living sphere specifying process.
FIG. 3 is a diagram illustrating one example of a service optimization logic according to the embodiment.
FIG. 4 is an explanation diagram for explaining an outline of a living sphere updating process.
FIG. 5 is a diagram illustrating a configuration example of an information processing apparatus according to the embodiment.
FIG. 6 is a flowchart illustrating the flow of the living sphere updating process.
FIG. 7 is a diagram illustrating one example of a merge method for merging a site area and a living sphere area.
FIG. 8 is a diagram illustrating another example of the merge method for merging the site area and the living sphere area.
FIG. 9 is a diagram of a hardware configuration illustrating one example of a computer that implements an information processing apparatus 100.

### Description of Embodiments

In the following, one example of modes (hereinafter, described as "embodiments") for carrying out an information processing apparatus, an information processing method, and an information processing program will be described in detail below with reference to the drawings. Furthermore, the information processing apparatus, the information processing method, and the information processing program are not limited by the embodiments described below. In addition, in the embodiments below, the same components are denoted by the same reference symbols, and repeated explanation will be omitted.

### [Embodiment]

### [1. Introduction]

One example of a living sphere specifying process (living sphere specifying logic) that is able to be performed as preprocessing of a living sphere updating process by the information processing apparatus 100 related to the proposed technology according to the present invention will be described.

For example, in most cases, for users who are living in urban areas, various kinds of substantial services (for example, purchase, traffic, public, welfare, entertainment, etc.) are provided in the neighboring region, so that the range of activities in daily life tends to be relatively narrow from the viewpoint that daily needs can be sufficiently obtained in the neighborhood. On the other hand, in rural rears, the degree of fulfillment of services provided is lower than that in urban areas, so that the range of daily activities of users who are living in rural areas tends to be broader than that of the users who are living in urban areas.

Accordingly, the information processing apparatus 100 is able to specify a living sphere of a user by applying the fact that the range of activities of the user tends to depend on the degree of fulfillment of services in the neighboring region, that is, the prosperity level of the region (hereinafter, sometimes referred to as a "regional prosperity level"), to the range of activities of the user.

Here, the living sphere indicates a range of a movement of the user on a daily basis, and is able to be found out from history information indicating where and how often the user arrives. However, it is not always possible to specify the living sphere of the user with high accuracy by only using this kind of history information as described above in the conventional technology. Therefore, the information processing apparatus 100 has a logic for specifying the living sphere of the user on the basis of the arrival history of the user and the regional prosperity level in the area in which the user frequently visits (for example, the area in which the home or workplace of the user is located).

In the following, a specific example of a living sphere specifying logic will be described in detail. Furthermore, with the living sphere specifying logic according to the embodiment, it is possible to further optimize the services (for example, advertisement, road guidance, risk notification, search results, etc.) that are provided to the user. A specific example of this kind of service optimization logic will also be described in detail below.

### [2. System configuration]

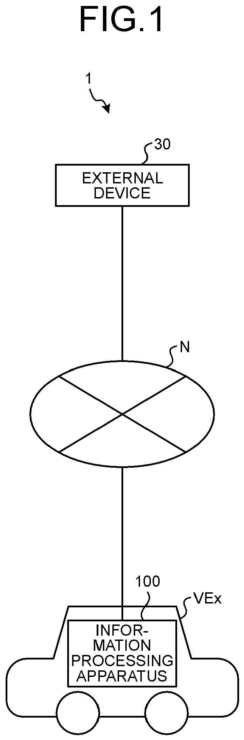

First, a configuration of the information processing system according to the embodiment will be described with reference to FIG. 1. FIG. 1 is a diagram illustrating one example of the information processing system according to the embodiment. In FIG. 1, an information processing system 1 is illustrated as one example of the information processing system according to the embodiment. In the information processing system 1, the living sphere updating process may also be implemented, in addition to the above described living sphere specifying logic and the service optimization logic.

As illustrated in FIG. 1, the information processing system 1 may include an external device 30 and the information processing apparatus 100. Furthermore, the external device 30 and the information processing apparatus 100 are connected so as to be able to communicate each other in a wired or wireless manner via a network N. Moreover, in the information processing system 1 illustrated in FIG. 1, an arbitrary number of the external devices 30 and an arbitrary number of the information processing apparatuses 100 may be included.

The information processing apparatus 100 is an apparatus that performs information processing according to the embodiment. The information processing apparatus 100 may perform, as the information processing according to the embodiment, the living sphere specifying process and the living sphere updating process that is performed in order to further enhance the accuracy of the living sphere that has been obtained in the living sphere specifying process. Due to this, the living sphere specifying process may be performed as preprocessing of the living sphere updating process.

For example, the information processing apparatus 100 is able to perform the following process as the living sphere specifying process. The information processing apparatus 100 acquires the history information on parking locations in each of which the user parked a vehicle, and calculates the regional prosperity level in a first extraction area that has been extracted in accordance with the distribution situation of the parking locations indicated by the history information on the basis of a predetermined parameter in the first extraction area. Then, the information processing apparatus 100 specifies a second extraction area that is the living sphere of the user on the basis of the first extraction area and the regional prosperity level.

Furthermore, the information processing apparatus 100 is also able to perform a service optimization process by using the living sphere that has been specified by the living sphere specifying process or using the living sphere that has been updated by the living sphere updating process.

Moreover, as illustrated in FIG. 1, the information processing apparatus 100 may be mounted on a vehicle VEx. In other words, the information processing apparatus 100 may be an in-vehicle apparatus. For example, the information processing apparatus 100 may be a dedicated navigation device that is built into or mounted on the vehicle VEx.

For example, the information processing apparatus 100 may be constituted by a navigation device and a video recording device. As one example of this, the information processing apparatus 100 may be a complex device in which an independently constituted navigation device and a video recording device are able to be communicate with each other. As another example, the information processing apparatus 100 may be a single device having both a navigation function and a video recording device function.

Furthermore, the information processing apparatus 100 may include various kinds of sensors. For example, the information processing apparatus 100 may include various kinds of sensors, such as a camera, an acceleration sensor, a gyro sensor, a GPS sensor, and an atmospheric pressure sensor. From the above, the information processing apparatus 100 may also have functions to interact with and provide information for supporting the user to drive performed on the basis of the sensor information acquired by the various kinds of sensors.

Moreover, in addition to the sensors provided in a in-vehicle device 10, the information processing apparatus 100 is also able to use the sensor information that has been detected by the sensor provided in the vehicle Vex itself as a safety driving system.

Furthermore, by installing a predetermined application in a portable type terminal device (for example, a smartphone, a tablet type terminal, a notebook type PC, a desktop type PC, a PDA, or the like) that is used by the user on a daily basis, the user is able to operate the portable type terminal device in the similar manner as the information processing apparatus 100. In other words, the user is able to use the own portable type terminal device as the in-vehicle device. From the above, the portable type terminal device owned by the user is also able to be referred to as the information processing apparatus 100 according to the embodiment.

Furthermore, in the present embodiment, it is assumed that the user is a person including a concept of a driver who drives the vehicle VEx or an owner of the vehicle VEx.

Subsequently, the external device 30 may be any device as long as the device implements the information processing according to the embodiment in cooperation with the information processing apparatus 100. For example, the external device 30 may be a content providing device that provides candidates for content (for example, advertisement content, sightseeing guidance, or the like) in accordance with travelling of the vehicle VEx, or may be a map information providing device that provides an electronic map. As another example, the external device 30 may be a device that provides time table information related to transportation facilities, such as trains and buses, or may be a device that provides a weather report.

Here, if the information processing apparatus 100 is an edge computer that performs an edge treatment in the vicinity of the user, the external device 30 may be, for example, a cloud computer that performs a process on the cloud side. In other words, the external device 30 may be a server device.

Moreover, in the embodiment described below, an example in which the information processing according to the embodiment is performed by the information processing apparatus 100 that is an in-vehicle device will be described, the information processing according to the embodiment may also be performed by the external device 30 provided on the cloud side. In this case, the external device 30 may have some or all of the functions of the information processing apparatus 100. Furthermore, in a case where the external device 30 performs the information processing according to the embodiment, the information processing apparatus 100 may have a structure such that the information processing apparatus 100 acquires the processing result obtained by the external device 30, and provides various kinds of services on the basis of the acquired processing result.

### [3. Overview of living sphere specifying process]

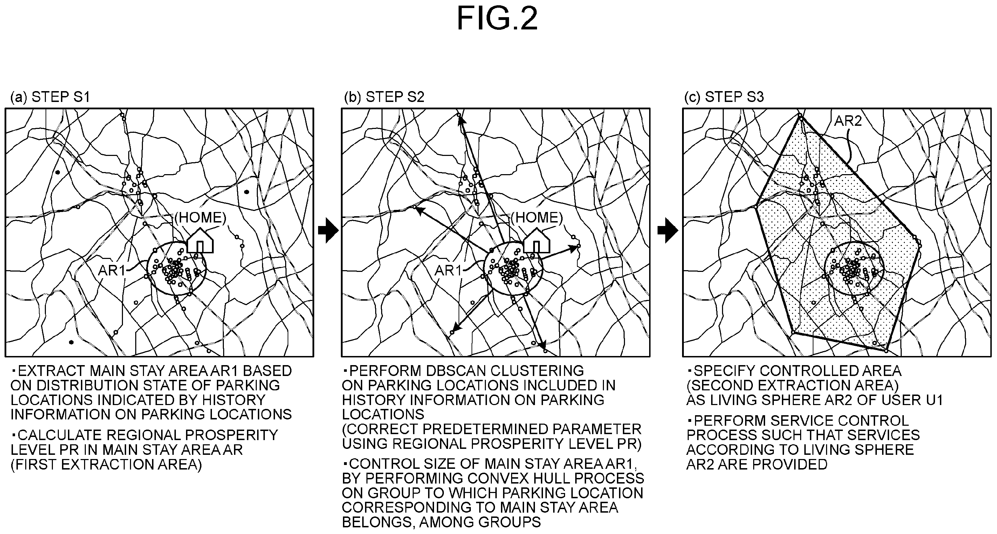

In the following, an overview of the living sphere specifying process that is performed as the preprocessing will be described with reference to FIG. 2. FIG. 2 is an explanation diagram for explaining the overview of the living sphere specifying process.

Furthermore, the example illustrated in FIG. 2 indicates an example in which, with the assumption that a user U1 who is one example of the user is using a content providing service (hereinafter, sometimes referred to as a "service SA") provided by the information processing apparatus 100, the living sphere of the user U1 is specified on the basis of history information on a parking location in which the user U1 has parked the vehicle VE1 (one example of the vehicle VEx).

Furthermore, FIG. 2 illustrates a scene in which the living sphere of the user U1 is being specified as the living sphere specifying logic in accordance with the processes indicated by (a) illustrated in FIG. 2 to (c) illustrated in FIG. 2.

Moreover, FIG. 2 illustrates an example in which the living sphere specifying logic is performed at a certain specific timing (for example, when one week has passed since the user U1 started using the service SA) at which pieces of history information that are sufficient for specifying the living sphere have been accumulated.

First, Step S1 indicated by (a) illustrated in FIG. 2 will be described. The information processing apparatus 100 extracts a main stay area AR1 that is the main area in which the user U1 mainly stays in daily life on the basis of the distribution situation of the parking location indicated by the history information on the parking location. For example, the information processing apparatus 100 may extract, as the main stay area AR1, an area with the highest density distribution of parking locations from among the areas obtained by dividing the map information in which the parking locations are indicated. For example, the main stay area AR1 may be considered as a home area in which the home of the user U1 is located, and is an area corresponding to the first extraction area.

Moreover, for example, the information processing apparatus 100 is also able to extract a plurality of the main stay areas AR, and, in this case, an area with the highest density distribution of parking locations may be considered as a home area, and an area with the next highest density distribution may be considered as a workplace area.

Next, the information processing apparatus 100 calculates a regional prosperity level PR in the main stay area AR1. For example, the information processing apparatus 100 may calculate the regional prosperity level PR in the main stay area AR1 on the basis of the number of predetermined facilities (for example, stores, public facilities, tourist facilities, medical institutions, landmarks, etc.) that are present in the main stay area AR1. As one example, the information processing apparatus 100 may calculate the regional prosperity level PR in the main stay area AR1 on the basis of the number of facilities per unit area in the main stay area AR1. For example, the information processing apparatus 100 may calculate the regional prosperity level PR with a higher value such that the main stay area AR1 is indicated to be more prosperous (various kinds of services is sufficient) as the number of facilities per unit area is greater.

Subsequently, Step S2 indicated by (b) illustrated in FIG. 2 will be described. The information processing apparatus 100 performs a predetermined clustering algorithm on the parking locations included in the history information on the parking locations. In the present embodiment, it is assumed that the information processing apparatus 100 performs DBSCAN clustering on the parking locations included in the history information on the parking locations.

For example, the information processing apparatus 100 is able to perform clustering under the setting condition that a group grows (generate a cluster) in a case where "N2" or more parking locations are present within a radius of "N1 km". Such a setting condition may be set in advance with respect to the information processing apparatus 100, or the information processing apparatus 100 may appropriately and dynamically change the setting condition in accordance with the distribution situation of the parking locations.

Furthermore, in DBSCAN, "min_distance" is used, as a parameter for adjusting whether or not to grow as the same group, in accordance with the distance between a parking location and a parking location, but the information processing apparatus 100 corrects the "min_distance" by using the regional prosperity level PR. For example, the information processing apparatus 100 performs correction by multiplying the "min_distance" by the regional prosperity level PR as a weighting value, and then, performs DBSCAN clustering by using the corrected "min_distance".

Furthermore, as described above, in DBSCAN, a group is generated as a result of determining whether to belong to the same group. Accordingly, the information processing apparatus 100 controls the size of the main stay area AR1 by performing a convex hull process on the group to which the parking location corresponding to the main stay area AR1 belongs among the generated groups. The example indicated by (b) illustrated in FIG. 2 indicates an example in which the main stay area AR1 has been corrected (processed) to increase the size (area and shape) of the main stay area AR1 as a result of the DBSCAN clustering and the convex hull process.

Subsequently, Step S3 indicated by (c) illustrated in FIG. 2 will be described. The information processing apparatus 100 specifies the second extraction area that is a polygon area obtained after the main stay area AR1 (the first extraction area) has been controlled at Step S2 as a living sphere AR2 of the user U1.

When the living sphere AR2 has been specified in this way, the information processing apparatus 100 performs a service control process such that the services according to the living sphere AR2 are provided to the user U1.

In the above, the overview of the living sphere specifying process has been described with reference to FIG. 2. For example, in a case where the history information on the parking locations is insufficient (for example, the initial state in which the user U1 has just started using the service SA), the information processing apparatus 100 may sometimes substantially specify the main stay area AR1 as the living sphere AR2 (the main stay area AR1 = the living sphere AR2). For example, there may be cases where the information processing apparatus 100 extracts a circular area having a specific radius as the main stay area AR1 on the basis of the distribution density.

However, the information processing apparatus 100 may repeat the living sphere specifying logic in accordance with elapsed time, and, as a result of the pieces of history information being accumulated, as indicated by (b) illustrated in FIG. 2, the information processing apparatus 100 becomes able to appropriately control the size of the main stay area AR1. As a result of this, as indicated by (c) illustrated in FIG. 2, the information processing apparatus 100 becomes able to specify the living sphere AR2 of an appropriate size (the main stay area AR1 < the living sphere AR2).

Moreover, as a result of additional pieces of history information being further accumulated over time, the information processing apparatus 100 may reduce the size of the living sphere AR2 than that of the example indicated by (c) illustrated in FIG. 2, or may further increase the size of the living sphere AR2.

Furthermore, when a group (cluster) is generated, the DBSCAN clustering illustrated in FIG. 2 corresponds to a process for removing the parking location corresponding to a location that is estimated not to be in the living sphere of the user U1 (for example, a location considerably far away from the main stay area AR1) as noise when the living sphere is specified. For example, in (a) illustrated in FIG. 2, parking locations indicating such noise are indicated by three black dots, whereas, in (b) illustrated in FIG. 2, an example in which the parking locations corresponding to noise has been removed as a result of the DBSCAN clustering is illustrated. Furthermore, as a result of the parking locations corresponding to noise being removed, as indicated by (c) illustrated in FIG. 2, the information processing apparatus 100 becomes able to specify the living sphere AR2 of the size closer to the primary living sphere considered by the user U1.

### [4. Service control according to living sphere]

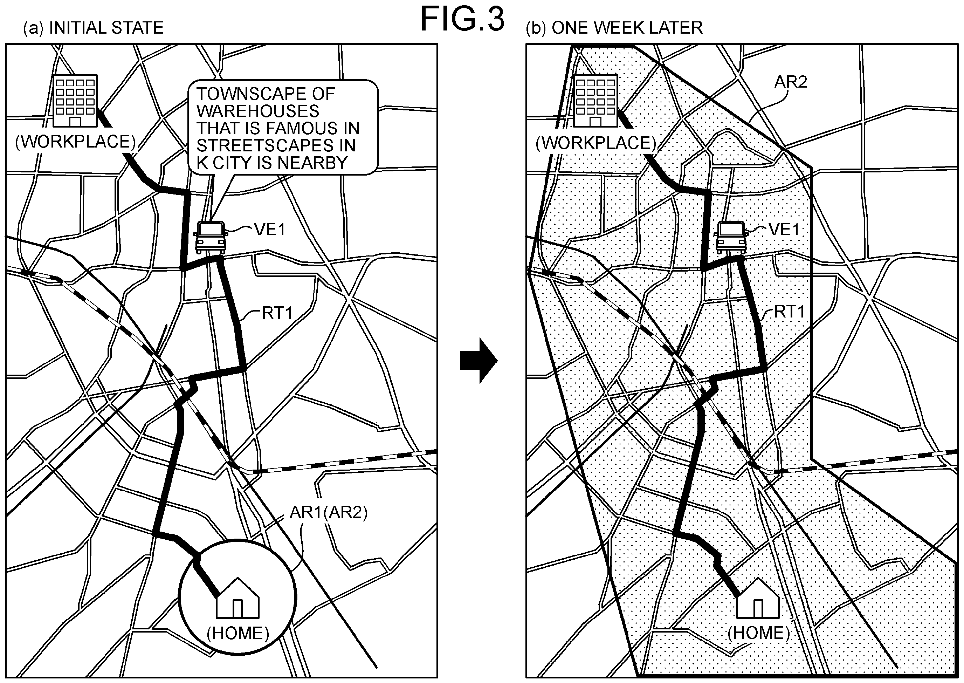

In the following, one example of the service optimization logic in which the information processing apparatus 100 controls the services to be provided to the user U1 in accordance with the living sphere AR2 will be described with reference to FIG. 3. FIG. 3 is a diagram illustrating one example of the service optimization logic according to the embodiment. In FIG. 3, a description will be given of one example of an optimization logic indicating how the content provided to the user U1 is optimized, as a result of the living sphere AR2 being appropriately specified over time by using the initial state in which the user U1 has just started using the service SA as a comparative example.

First, (a) illustrated in FIG. 3 will be described. In (a) illustrated in FIG. 3, one example of providing content that is in the initial state in which the user U1 has just started using the service SA is indicated. As indicated by (a) illustrated in FIG. 3, in the initial state, the information processing apparatus 100 only extracts the circular area around the home of the user U1 as the main stay area AR1, and, regards the main stay area AR1 as the living sphere AR2 of the user U1 at this time point. As indicated by (a) illustrated in FIG. 3, in the living sphere AR2 in the state described above, a travel route RT1 connecting the home of the user U1 to the workplace is not included. In other words, in the example indicated by (a) illustrated in FIG. 3, the information processing apparatus 100 is not able to recognize the travel route RT1 as a daily moving range of the user U1. In other words, the information processing apparatus 100 is not able to recognize the travel route RT1 that should primarily be the living sphere for the user U1 as the living sphere.

In such a case, as indicated by (a) illustrated in FIG. 3, there may be cases where the information processing apparatus 100 provides, as the content of sightseeing guidance, the information that the user U1 who is using the travel route RT1 as the living sphere should already know. For example, as indicated by (a) illustrated in FIG. 3, when the user U1 is travelling along the travel route RT1 and approaches K city, the information processing apparatus 100 may sometimes provide the content of sightseeing guidance indicating that "a townscape of warehouses that is famous in streetscapes in K city is nearby". However, it is obvious that the user U1 has already known such information, and it can be said that the information is useless for the user U1. Then, there may be cases where, if, for example, content of such sightseeing guidance is presented every time the user U1 commutes to work, the user U1 feels bothersome.

However, as described above, the information processing apparatus 100 becomes able to further appropriately specify the living sphere AR2 as a result of pieces of history information being accumulated over time. For example, as indicated by (b) illustrated in FIG. 3, the information processing apparatus 100 becomes able to increase the size of the main stay area AR1 to the size including the travel route RT1 at the time point after a lapse of one week since the user U1 started using the service SA, and becomes able to specify the living sphere AR2 with the size closer to the primary living sphere considered by the user U1.

Furthermore, in the example indicated by (b) illustrated in FIG. 3, the information processing apparatus 100 becomes able to figure out that the content of the sightseeing guidance provided in the initial state is useless information for the user U1. After that, as indicated by (b) illustrated in FIG. 3, the information processing apparatus 100 performs control such that the content of sightseeing guidance is not provided even if the user U1 approaches K city while driving the travel route RT1. Furthermore, as a result of this, the information processing apparatus 100 becomes able to optimize providing of the content such that the user U1 does not feel bothersome as a result of the content being provided.

### [5. Outline of living sphere updating process]

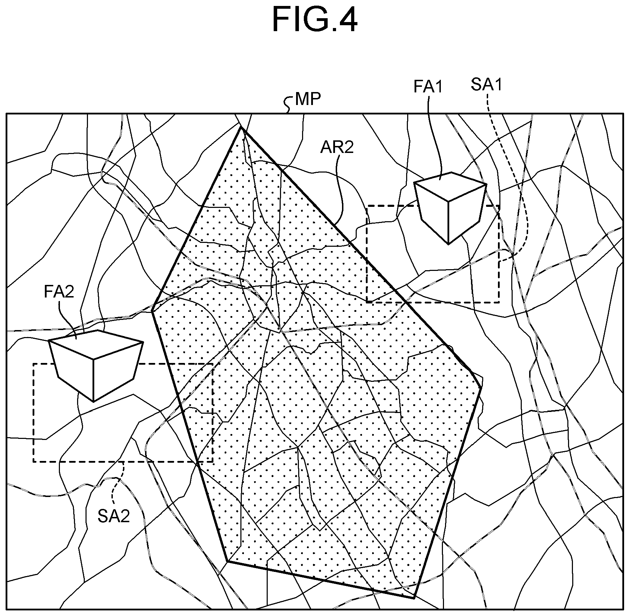

In the following, the outline of the living sphere updating process will be described from a point of view of a problem in the living sphere specifying process described above with reference to FIG. 2. FIG. 4 is an explanation diagram for explaining the outline of the living sphere updating process. In FIG. 4, the living sphere AR2 of the user U1 specified by the living sphere specifying process is indicated on a map MP. The area indicated by the living sphere AR2 corresponds to the living sphere area of the user U1 determined at this time, and may be defined by the coordinate system associated with the map MP.

Here, according to the example illustrated in FIG. 4, on the map MP, a facility FA1 and a facility FA2 that are estimated to be frequently visited (used) by the user U1.

As illustrated in FIG. 4, the facility FA1 is a planimetric feature that is built in the site area SA1. In other words, the site area SA1 is a site area that indicates the range of the site occupied by the facility FA1. For example, if it is assumed that the facility FA1 is a store corresponding to the true purpose of use that is used by the user U1, a living sphere that also includes the true location in which the facility FA1 is present (a target location that is frequently visited) needs to be specified. However, in the living sphere AR2, the true location in which the facility FA1 is present is not included, but a part of the site indicated by the site area SA1 is merely included.

As described above with reference to FIG. 2, the history information on the parking location is used in the living sphere specifying process, so that the part of the site included in the living sphere AR2 is highly likely to be a parking lot that is present in the site area SA1.

The same applies to the facility FA2. As illustrated in FIG. 4, the facility FA2 is a planimetric feature that is built in the site area SA2. In other words, the site area SA2 is a site area that indicates the range of the site occupied by the facility FA2. For example, if it is assumed that the facility FA2 is a station platform corresponding to the true purpose of use that is used by the user U1, a living sphere that also includes the true location in which the facility FA2 is present (a target location that is frequently visited) needs to be specified. However, in the living sphere AR2, the true location in which the facility FA2 is present is not included, but a part of the site indicated by the site area SA2 is merely included.

As described above, the history information on the parking location is used in the living sphere specifying process, so that the part of the site included in the living sphere AR2 is highly likely to be a parking lot that is present in the site area SA2.

In this way, in the living sphere specifying process, there are cases where the true location that is to be primarily included in the living sphere (i.e., the location of the planimetric feature corresponding to the true purpose of use that is used by the user U1) is not included, the living sphere that only includes the parking location that is located on the route to the true location is merely generated, so that it can be said that there is room for improvement in terms of accuracy.

Accordingly, in a case where the planimetric feature serving as the true purpose of use that is used by the user is located in, for example, a vast site, the information processing apparatus 100 performs the living sphere updating process for specifying the living sphere that also includes the true location that is the location of the subject planimetric feature as a new living sphere of the user. Specifically, the information processing apparatus 100 updates the living sphere on the basis of a site area that is a specific range occupied by the planimetric feature corresponding to the true purpose of use that is used by the user and on the basis of a living sphere that has been once specified by an arbitrary method. More specifically, the information processing apparatus 100 merges (fuses) the site area with the living sphere that has been specified by the arbitrary method, thereby updating the fused area as a new living sphere area that is alternative to the living sphere that is used up to this point.

Moreover, the arbitrary method mentioned here may be the living sphere specifying process described above with reference to FIG. 2, or may be any other conventional methods. For example, the arbitrary method may be a method mentioned as the prior art.

Furthermore, in a case of the living sphere AR2 as an example, the service control process described above with reference to FIG. 3 may be performed by using the updated living sphere that has been obtained by performing the living sphere updating process on the living sphere AR2.

### [6. Configuration of information processing apparatus]

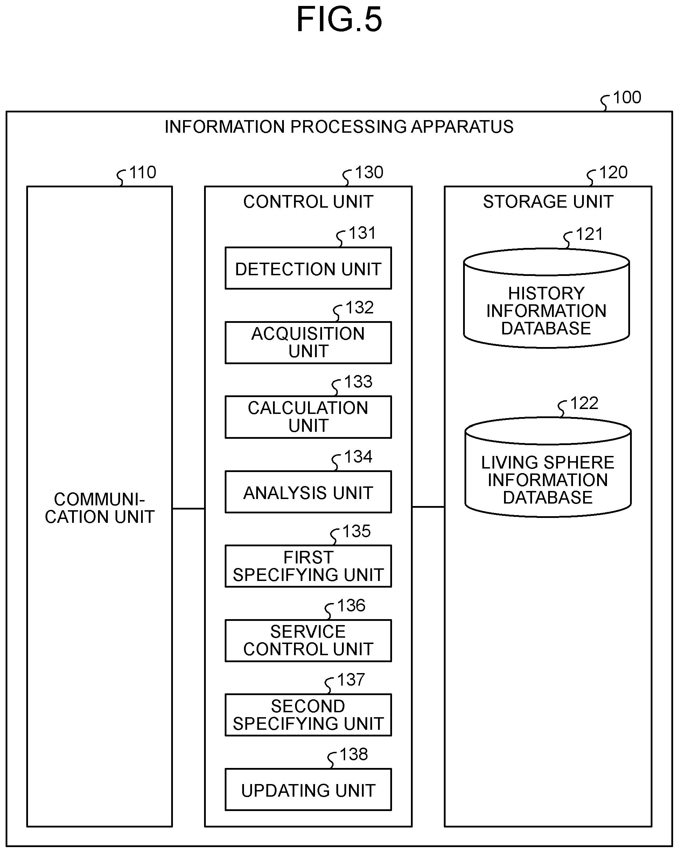

In the following, the information processing apparatus 100 according to the embodiment will be described with reference to FIG. 5. FIG. 5 is a diagram illustrating a configuration example of the information processing apparatus 100 according to the embodiment. As illustrated in FIG. 5, the information processing apparatus 100 includes a communication unit 110, a storage unit 120, and a control unit 130.

### (Regarding communication unit 110)

The communication unit 110 is implemented by, for example, a network interface card (NIC), or the like. Then, the communication unit 110 is connected to the network N in a wired or wireless manner, and sends and receives information to and from, for example, the in-vehicle device 10.

### (Regarding storage unit 120)

The storage unit 120 is implemented by, for example, a semiconductor memory device, such as a random access memory (RAM) of a flash memory, or a storage device, such as a hard disk or an optical disk. The storage unit 120 may include a history information database 121 and a living sphere information database 122.

### (Regarding history information database 121)

The history information database 121 stores therein the history information on the parking location in which the user has parked the vehicle VEx. For example, the history information database 121 may store a set of parking location in which the user has parked the vehicle Vex and parking time at which the user parked the vehicle Vex as a single record, in an associated manner with a history ID. Moreover, the information processing apparatus 100 may also include a GPS receiving apparatus, and the parking location may be defined by longitude and latitude information derived from GPS.

### (Regarding living sphere information database 122)

The living sphere information database 122 stores therein information indicating the living sphere that has been specified by the living sphere specifying process. For example, the living sphere information database 122 may store a set of date and time on which the living sphere specifying process is performed and the information indicating the living sphere AR2 specified at the date and time as a single record in an associated manner with a living sphere ID.

Furthermore, the living sphere information database 122 may also store therein information that indicates the updated living sphere by applying the living sphere updating process to the living sphere AR2.

Furthermore, the information that indicates the living sphere mentioned here may be identified by the location coordinates associated with the map MP.

### (Regarding control unit 130)

The control unit 130 is implemented by a central processing unit (CPU), a micro processing unit (MPU), or the like executing various kinds of programs (for example, an information processing program according to the embodiment) stored in the storage device inside the information processing apparatus 100 by using the RAM as a work area. Furthermore, the control unit 130 is implemented by, for example, an integrated circuit, such as an application specific integrated circuit (ASIC) or a field programmable gate array (FPGA).

As illustrated in FIG. 5, the control unit 130 includes a detection unit 131, an acquisition unit 132, a calculation unit 133, an analysis unit 134, a first specifying unit 135, a service control unit 136, a second specifying unit 137, and an updating unit 138, and implements or performs the functions and operations of information processing described below. Moreover, the internal configuration of the control unit 130 is not limited to the configuration illustrated in FIG. 5, and another configuration may be used as long as information processing that will be described below is performed. Furthermore, the connection relation between the processing units included in the control unit 130 is not limited to the connection relation illustrated in FIG. 5, and another connection relation may also be used.

For example, the calculation unit 133, the analysis unit 134, and the first specifying unit 135 are processing units corresponding to the living sphere specifying process. On the other hand, the second specifying unit 137 and the updating unit 138 are processing units corresponding to the living sphere updating process.

### (Regarding detection unit 131)

The detection unit 131 determines whether or not the user has parked the vehicle VEx, and, if it is determined that the user has parked the vehicle VEx, the detection unit 131 detects the parking location in which the user has parked the vehicle VEx. For example, if the vehicle Vex has been stopped, the detection unit 131 measures a stopping period of time, and, if it is recognized the vehicle is stopped for a predetermined period of time or more, the detection unit 131 may determine that the user has stopped the vehicle VEx. Furthermore, in this case, the detection unit 131 may detect the location in which the vehicle Vex has parked as the parking location.

Furthermore, the detection unit 131 registers a set of location information that indicates the parking location and time at which the vehicle Vex is parked as the history information on the parking location in the history information database 121. For example, the detection unit 131 may register a set of the location information that indicates the parking location and time at which the vehicle Vex is parked in the history information database 121 in an associated manner with the history ID.

### (Regarding acquisition unit 132)

The acquisition unit 132 acquires the history information on the parking location in which the user has parked the vehicle VEx. For example, if the acquisition unit 132 determines that it is time to perform the living sphere determination logic, the acquisition unit 132 may acquire the history information from the history information database 121.

Furthermore, the acquisition unit 132 may also acquire area information that indicates the living sphere area of the user on the map MP. For example, the acquisition unit 132 acquires, as the area information, the location coordinates indicating the location of the living sphere determined by the living sphere determination logic. For example, if the acquisition unit 132 determines that it is time to perform the living sphere updating process, the acquisition unit 132 may acquire the location coordinates from the living sphere information database 122.

### (Regarding calculation unit 133)

The calculation unit 133 calculates a regional prosperity level that is the prosperity level in a predetermined area. For example, the calculation unit 133 acquires a distribution situation of the parking location on the basis of the history information on the parking location. Then, the calculation unit 133 extracts, on the basis of the acquired distribution situation, the main stay area AR1 that is the main area in which the user of the vehicle Vex mainly stays in daily life. For example, the calculation unit 133 may extract, as the main stay area AR1, the area with the highest density distribution of the parking location from among the areas that are obtained by dividing the map information indicating the distribution situation.

In such a situation, the calculation unit 133 calculates the regional prosperity level PR in the main stay area AR1 on the basis of the predetermined parameter used in the main stay area AR1 (the first extraction area). For example, the calculation unit 133 may calculate a predetermined parameter per unit area used in the main stay area AR1 as the regional prosperity level PR.

Moreover, the predetermined parameter mentioned here is one of the number of predetermined facilities (for example, stores, public facilities, tourist facilities, medical institutions, landmarks, etc.) that are present in the main stay area AR1, the number of public transportation facilities (for example, stations, bus stops, etc.) that are present in the main stay area AR1, and feature information that indicates the geographic features in the main stay area AR1.

Furthermore, as the predetermined parameter, the calculation unit 133 may calculate the regional prosperity level PR by using the number of predetermined facilities that are present in the main stay area AR1 or the number of public transportation facilities that are present in the main stay area AR1, and may correct the calculated regional prosperity level PR with the feature information.

### (Regarding analysis unit 134)

The analysis unit 134 performs clustering on the parking locations indicated by the history information on the parking locations on the basis of the regional prosperity level PR. For example, the analysis unit 134 may perform a predetermined clustering algorithm on the parking locations included in the history information on the parking locations. For example, the analysis unit 134 may perform the DBSCAN clustering. More specifically, the analysis unit 134 may perform the DBSCAN clustering under the setting condition that the group will grow if "N2" or more parking locations are present within the radius of "N1 km".

Furthermore, in the DBSCAN clustering, the analysis unit 134 uses "min_distance" as a parameter for adjusting whether or not to grow as the same group in accordance with the distance between the parking location and the parking location, but the analysis unit 134 may correct the "min_distance" with the regional prosperity level PR and perform clustering again by using the corrected "min_distance".

### (Regarding first specifying unit 135)

The first specifying unit 135 specifies the second extraction area that is the living sphere of the user on the basis of the main stay area AR1 (the first extraction area) and the regional prosperity level PR. For example, the first specifying unit 135 performs a convex hull process on the group to which the parking locations included in the main stay area AR1 belongs from among the groups of the parking locations generated as a result of clustering performed by the analysis unit 134. Then, the first specifying unit 135 specifies the second extraction area that is a polygon area generated by the convex hull process as the living sphere AR2 of the user. Moreover, this process corresponds to the process for controlling the size of the main stay area AR1, approaching the size similar to the primary living sphere considered by the user, and specifying the second extraction area corresponding to the area that has been approached to the similar size as the living sphere AR2.

Furthermore, the first specifying unit 135 may register the information that indicates the living sphere AR2 in the living sphere information database.

### (Regarding service control unit 136)

The service control unit 136 controls the services to be provided to the user of the vehicle Vex in accordance with the living sphere AR2 (the second extraction area) specified by the first specifying unit 135. For example, the service control unit 136 controls the services to be provided to the user of the vehicle Vex by the service optimization logic on the basis of the living sphere AR2 specified by the first specifying unit 135.

As described above with reference to FIG. 3, the service control unit 136 may perform control such that the content of sightseeing guidance corresponding to the living sphere AR2 is not provided to the user. On the other hand, the service control unit 136 may perform control such that the advertisement content related to the predetermined facility (for example, a store) that is present in the living sphere AR2 is provided to the user. For example, the service control unit 136 extracts the advertisement content of the store that is present in the living sphere AR2 from among the pieces of advertisement content acquired from the external device 30, whereby the service control unit 136 may perform control such that the extracted advertisement content is output from the information processing apparatus 100. Moreover, the advertisement content may be image information, and, in this case, the advertisement content may be output from a display screen that is included in the information processing apparatus 100. On the other hand, the advertisement content may also be audio information, and, in this case, the advertisement content may be output from a speaker that is included in the information processing apparatus 100.

For example, in a situation in which the living sphere of the user is not able to be specified with high accuracy, there may be a case in which advertisement content of a region deviated from a range of daily activities of the user, so that it may not be possible to say that such advertisement content is less likely to appeal to the user. On the other hand, with the service optimization logic according to the embodiment, advertisement content suitable for the living sphere AR2 with the size similar to the primary living sphere is provided, so that it is possible to enhance the appealing power of the advertisement content.

### (Regarding second specifying unit 137)

The second specifying unit 137 specifies the planimetric feature whose site is partially included in the living sphere area. For example, the second specifying unit 137 specifies the planimetric feature whose site is partially included in the living sphere area that has been specified by an arbitrary method, such as the living sphere specifying process, described above.

For example, the second specifying unit 137 specifies the planimetric feature that is associated with the user from among the planimetric features whose sites are partially included in the living sphere area. For example, the second specifying unit 137 may specify an object associated with the user from among the planimetric features each having a site area size equal to or greater than a predetermined value. As one example, the second specifying unit 137 may specify the planimetric feature associated with the user on the basis of the history information on the user related to the planimetric feature. For example, the second specifying unit 137 may specify the planimetric feature associated with the user on the basis of the visit history of the user visited to the site or the usage history of the user with respect to the planimetric feature.

### (Regarding updating unit 138)

The updating unit 138 updates the living sphere area on the basis of the site area that indicates a range of the site that is occupied by the planimetric feature specified by the second specifying unit 137 and on the basis of the living sphere area that has been specified by an arbitrary method. Specifically, the updating unit 138 merges the site area with the living sphere area, whereby the updating unit 138 updates the merged area as a new living sphere area of the user alternative to the living sphere area that is used up to this point.

For example, the updating unit 138 may generate a buffer in a site area that includes the planimetric feature that has been specified by the second specifying unit 137, and may merge the site area obtained after the buffer has been generated with the living sphere area. As another method, the updating unit 138 may merge the site area with the living sphere area by performing the convex hull process such that the location information on the planimetric feature that has been specified by the second specifying unit 137 is included.

### [7. Processing procedure]

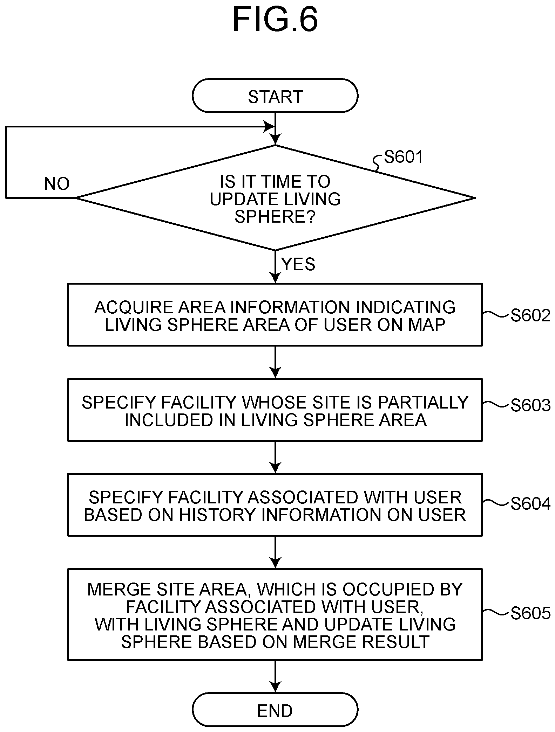

In the following, the procedure of the living sphere updating process will be described with reference to FIG. 6. FIG. 6 is a flowchart illustrating the flow of the living sphere updating process.

First, the acquisition unit 132 determines whether or not it is time to update the living sphere (Step S601). If it is not time to update the living sphere (No at Step S601), the acquisition unit 132 waits until it is able to be determined that it is time to update the living sphere.

In contrast, it is able to be determined that it is time to update the living sphere (Yes at Step S601), the acquisition unit 132 acquires the area information that indicates the living sphere area of the user U1 on the map MP (Step S602). For example, the acquisition unit 132 may acquire the area information that indicates the living sphere area that has been determined by using an arbitrary method.

For example, the acquisition unit 132 may acquire the area information that indicates the living sphere area that has been determined by the living sphere determination logic described above with reference to FIG. 2. As one example, the acquisition unit 132 may acquire the location coordinates defined by the coordinate system corresponding to the map MP as the area information that indicates the living sphere area. In the following, the flow of the living sphere updating process will be described with the assumption that the acquisition unit 132 has acquired the location coordinates that indicates an area of the living sphere AR2 (hereinafter, referred to as a "living sphere area AR2") as the living sphere of the user U1 by the above described living sphere determination logic as a result of the living sphere AR2 illustrated in FIG. 4 being specified.

First, the second specifying unit 137 specifies the facility (planimetric feature) whose site is partially included in the living sphere area AR2 (Step S603). For example, the second specifying unit 137 may specifies the facility whose site is partially included in the living sphere area AR2 from among the planimetric features with the site area size equal to or greater than the predetermined value. Furthermore, the second specifying unit 137 may specify the facility whose site is partially included in the living sphere area AR2 on the basis of the map MP. Here, it is assumed that the second specifying unit 137 has specified the facility FA1 and the facility FA2 by using the example illustrated in FIG. 4. Furthermore, each of the square measure of the site area SA1 corresponding to the site occupied by the facility FA1 and the square measure of the site area SA2 corresponding to the site occupied by the facility FA2 may be equal to or greater than the predetermined value.

Next, the second specifying unit 137 specifies the facility associated with the user U1 between the facility FA1 and the facility FA2 on the basis of behavior history of the user U1 (Step S604). Specifically, the second specifying unit 137 specifies the facility that is daily used (i.e., frequently used) between the facility FA1 and the facility FA2 on the basis of the history information on the user U1. For example, the second specifying unit 137 determines whether or not a predetermined number of visit track records are present related to each of the facility FA1 and the facility FA2 on the basis of the distribution situation of the parking locations indicated by the history information. Then, if the second specifying unit 137 is able to obtain the predetermined number or more visit track records, the second specifying unit 137 may specify the subject facility as the facility associated with the user U1. In the following, the flow of the living sphere updating process with the assumption that the second specifying unit 137 has specified the facility FA1 as the facility associated with the user U1 between the facility FA1 and the facility FA2.

The updating unit 138 updates, by merging the site area SA1 occupied by the facility FA1 with the living sphere area AR2, the merged area as a new living sphere area of the user U1 alternative to the living sphere area AR2 (Step S605). In this way, as a result of merging the site area SA1 with the living sphere, it is possible to enhance the accuracy of the relationship between the planimetric feature related to the user U1 and the living sphere.

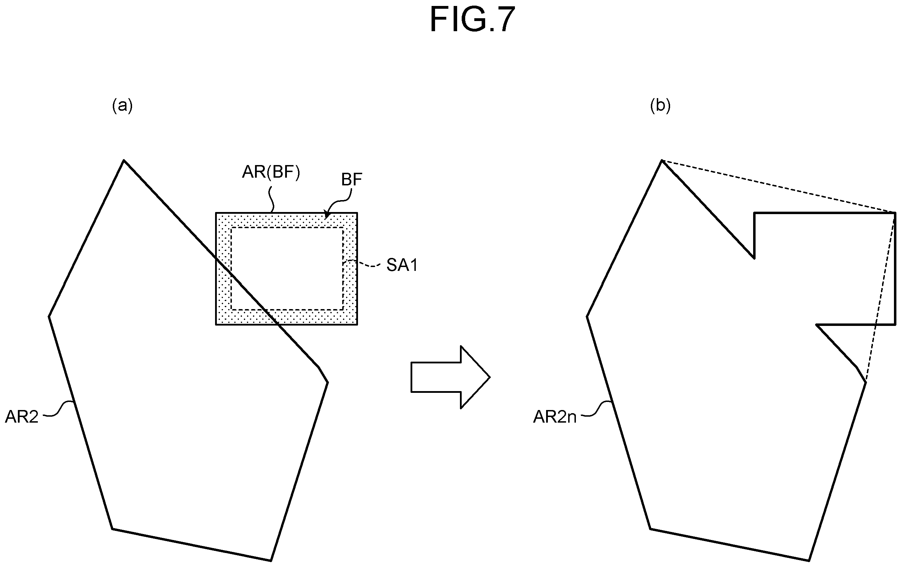

In the following, one example of a merge method will be described with reference to FIG. 7. FIG. 7 is a diagram illustrating one example of the merge method for merging the site area and the living sphere area. In FIG. 7, a scene in which the site area SA1 is merged with the living sphere area AR2 is illustrated.

As indicated by (a) illustrated in FIG. 7, first, the updating unit 138 generates a buffer BF in the site area SA1. For example, the updating unit 138 generates the buffer BF around the circumference of the site area SA1 by calculating a range to the predetermined distance from the site area SA1. Moreover, such a buffering process may be performed on the map MP, and the updating unit 138 acquires a buffer area AR (BF) that indicates a range of the buffer BF. As a result of this, the buffer area AR (BF) may be defined by the coordinate system corresponding to the map MP.

Next, as indicated by (b) illustrated in FIG. 7, the updating unit 138 combines the living sphere area AR2 and the buffer area AR (BF) so as to fuse the overlapping portion between the inner part of the living sphere area AR2 and the inner part of the buffer area AR (BF). As a result of this, as indicated by (b) illustrated in FIG. 7, a new living sphere area AR2n is obtained. Accordingly, the updating unit 138 updates the living sphere area AR2n that is the merged area as a new living sphere area of the user U1 that is alternative to the living sphere area AR2.

Moreover, the living sphere area AR2n indicated by (b) illustrated in FIG. 7 has a complicated shape as a polygon. Therefore, the updating unit 138 may control the shape of the living sphere area AR2n by performing the convex hull process on the location coordinates that indicates the location of the living sphere area AR2n. As a result of this, as indicated by (b) illustrated in FIG. 7, it is possible to obtain the living sphere area AR2n whose area is partially alternative to dotted lines.

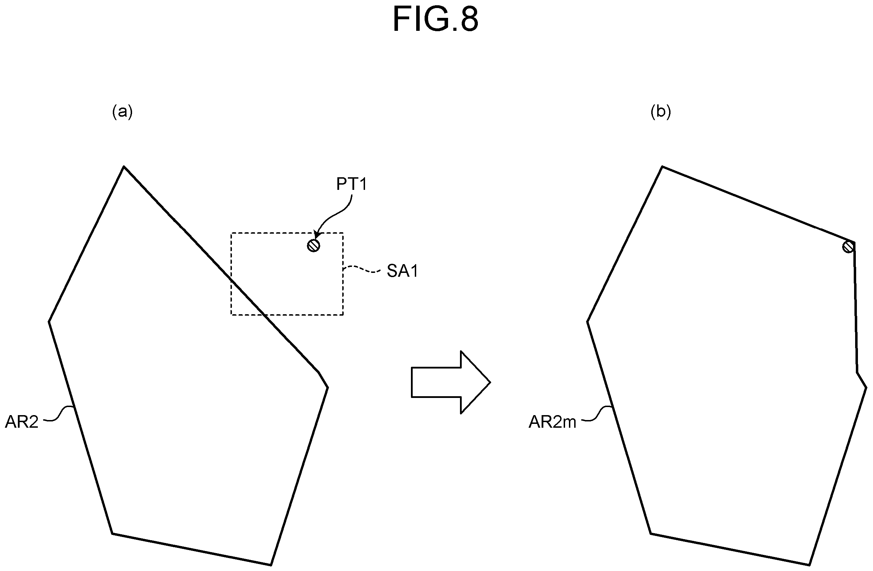

Next, another example of the merge method will be described with reference to FIG. 8. FIG. 8 is a diagram illustrating another example of the merge method for merging the site area and the living sphere area. In also FIG. 8, a scene in which the site area SA1 is merged with the living sphere area AR2 is illustrated.

As indicated by (a) illustrated in FIG. 8, first, the updating unit 138 acquires true location coordinates PT1 that indicates the location of the facility FA1 that is located inside the site and that is indicated by the site area SA1. Then, the updating unit 138 controls the shape of the living sphere area AR2 by performing the convex hull process between the location coordinates that indicates the location of the living sphere area AR2 and the location coordinates PT1. With this process, as indicated by (b) illustrated in FIG. 8, it is possible to obtain a new living sphere area AR2m in which the site area SA1 and the living sphere area AR2 are merged. Then, the updating unit 138 updates the living sphere area AR2m that is the merged area as a new living sphere area of the user U1 that is alternative to the living sphere area AR2.

### [8. Release of limitation]

The method of merging the site area with the living sphere area has been described above with reference to FIG. 7 and FIG. 8, but the merge method is not limited to the above described example. For example, the updating unit 138 may update a square area enclosing the living sphere area AR2n (the same applies to the living sphere area AR2m) as a new living sphere area that is alternative to the living sphere area AR2.

Furthermore, in (a) illustrated in FIG. 7, an example in which the buffer is generated on only the site area SA1 side, but the updating unit 138 may combine both of the buffer areas by also generating a buffer in the living sphere area AR2.

### [9. Hardware configuration]

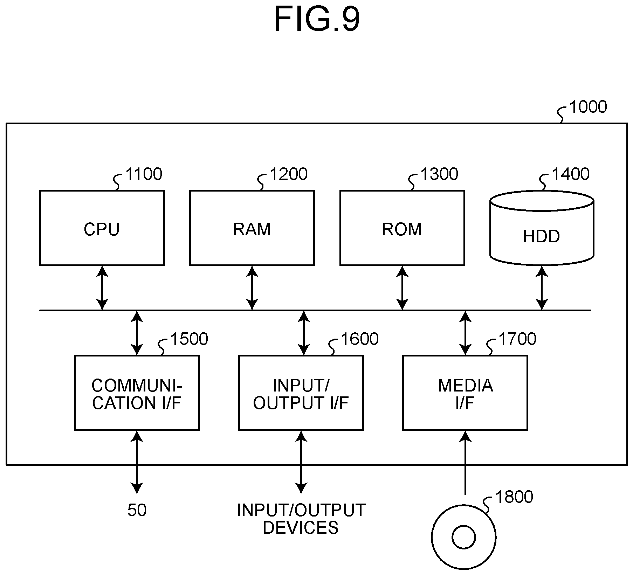

Furthermore, the information processing apparatus 100 according to the above described embodiment is implemented by, for example, a computer 1000 having a configuration illustrated in FIG. 9. FIG. 9 is a diagram of a hardware configuration indicating one example of a computer that implements the function of the information processing apparatus 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates on the basis of a program stored in the ROM 1300 or the HDD 1400, and controls each of the units. The ROM 1300 stores therein a boot program executed by the CPU 1100 at the time of activation of the computer 1000, a program depending on the hardware of the computer 1000, and the like.

The HDD 1400 stores therein a program executed by the CPU 1100, data that is used by the program, and the like. The communication interface 1500 receives data from the other devices via a predetermined communication network, sends the received data to the CPU 1100, and transmits the data generated by the CPU 1100 to the other devices via the predetermined communication network.

The CPU 1100 controls an output device, such as a display or a printer, and an input device, such as a keyboard or a mouse, via an input/output interface 1600. The CPU 1100 acquires data from the input device via the input/output interface 1600. Furthermore, the CPU 1100 outputs the generated data to the output device via the input/output interface 1600.

The media interface 1700 reads a program or data stored in a recording medium 1800, and provides the read program or data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a digital versatile disk (DVD) or a phase change rewritable disk (PD), a magneto-optical recording medium, such as a magneto-optical disk (MO), a tape medium, a magnetic recording medium, or a semiconductor memory.

For example, in a case where the computer 1000 functions as the information processing apparatus 100 according to the embodiment, the CPU 1100 of the computer 1000 implements the functions of the control unit 130 by executing the programs loaded on the RAM 1200. The CPU 1100 of the computer 1000 reads and executes the programs from the recording medium 1800, but, as another example, the programs may be acquired from another device via the predetermined communication network.

### [10. Others]

Furthermore, of the processes described above in the embodiments, the whole or a part of the processes that are mentioned as being automatically performed may also be manually performed. Furthermore, the whole or a part of the processes that are mentioned as being manually performed may also be automatically performed using known methods. Furthermore, the flow of the processes, the specific names, and the information containing various kinds of data or parameters indicated in the above specification and drawings may be arbitrarily changed unless otherwise stated. For example, the various kinds of information illustrated in each of the drawings are not limited to the information illustrated in the drawings.

Furthermore, the components of each of the units illustrated in the drawings are only for conceptually illustrating the functions thereof and are not always physically configured as illustrated in the drawings. In other words, the specific shape of a separate or integrated device is not limited to the drawings. Specifically, all or part of each of the components may be configured by functionally or physically separating or integrating any of the units depending on various loads or use conditions. For example, the information processing apparatus may be a server. The server may acquire (receive) information needed to specify the living sphere from the terminal included in the vehicle, and may be constituted such that the living sphere specifying and updating processes are performed by the server.

Furthermore, each of the processes described above may be appropriately used in combination as long as the content of processes does not conflict with each other.

In the above, the embodiments of the present invention have been described in detail based on the drawings; however, the embodiments are described by way of an example. In addition to the embodiments described in this specification, the present invention may be implemented in other forms in which various modifications and changes are made in accordance with the knowledge of persons skilled in the art.

### Reference Signs List

- 1: information processing system

- 30: external device
- 100: information processing apparatus
- 120: storage unit
- 121: history information database
- 122: living sphere information database
- 130: control unit
- 131: detection unit
- 132: acquisition unit
- 133: calculation unit
- 134: analysis unit
- 135: first specifying unit
- 136: service control unit
- 137: second specifying unit
- 138: updating unit

## Claims

1. An information processing apparatus comprising:
an acquisition unit that acquires area information that indicates a living sphere area of a user on a map;
a specifying unit that specifies a planimetric feature whose site is partially included in the living sphere area; and
an updating unit that updates the living sphere area based on a site area that indicates a range of the site occupied by the planimetric feature that has been specified by the specifying unit and based on the living sphere area.

2. The information processing apparatus according to claim 1, wherein the specifying unit specifies, from among the planimetric features, the planimetric feature associated with the user.

3. The information processing apparatus according to claim 2, wherein the specifying unit specifies an object associated with the user as the planimetric feature from among the planimetric features each having a site area size that is equal to or greater than a predetermined value.

4. The information processing apparatus according to claim 3, wherein the specifying unit specifies the planimetric feature associated with the user based on history information on the user related to the planimetric feature.

5. The information processing apparatus according to claim 4, wherein the specifying unit specifies the planimetric feature associated with the user based on visit history to the site visited by the user or usage history of the planimetric feature used by the user.

6. The information processing apparatus according to any one of claims 1 to 5, wherein the updating unit updates, by fusing the site areas with the living sphere area, the fused area as a new living sphere area that is related to the user and that is alternative to the living sphere area.

7. The information processing apparatus according to claim 6, wherein the updating unit fuses the site area with the living sphere area by performing a convex hull process such that location information on the planimetric feature that has been specified by the specifying unit is included.

8. The information processing apparatus according to claim 5, wherein the updating unit generates a buffer in the site area, and fuses the site area obtained after the buffer has been generated with the living sphere area.

9. An information processing method executed by an information processing apparatus, the information processing method comprising:
an acquiring step of acquiring area information that indicates a living sphere area of a user on a map;
a specifying step of specifying a planimetric feature whose site is partially included in the living sphere area; and
an updating step of updating the living sphere area based on a site area that indicates a range of the site occupied by the planimetric feature that has been specified by the specifying step and based on the living sphere area.

10. An information processing program that causes an information processing apparatus to execute a process comprising:
an acquiring step of acquiring area information that indicates a living sphere area of a user on a map;
a specifying step of specifying a planimetric feature whose site is partially included in the living sphere area; and
an updating step of updating the living sphere area based on a site area that indicates a range of the site occupied by the planimetric feature that has been specified by the specifying step and based on the living sphere area.
